(19) Europäisches Patentamt
European Patent Office
Office européen des brevets

(11) EP 1 789 869 B1

(12) EUROPEAN PATENT SPECIFICATION

(45) Date of publication and mention
of the grant of the patent:
**17.03.2010 Bulletin 2010/11**

(51) Int Cl.:
*G06F 7/72* (2006.01)

(21) Application number: **05818313.8**

(86) International application number:
**PCT/US2005/031672**

(22) Date of filing: **02.09.2005**

(87) International publication number:
**WO 2006/039068 (13.04.2006 Gazette 2006/15)**

(54) **METHOD AND APPARATUS FOR PERFORMING MODULAR EXPONENTIATIONS**

VERFAHREN UND VORRICHTUNG ZUR DURCHFÜHRUNG MODULARER POTENZIERUNGEN

PROCEDE ET APPAREIL PERMETTANT D'EFFECTUER DES EXPONENTIATIONS MODULAIRES

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.09.2004 US 944353**

(43) Date of publication of application:
**30.05.2007 Bulletin 2007/22**

(73) Proprietor: **Intel Corporation**
**Santa Clara, CA 95052 (US)**

(72) Inventors:
• **KOSHY, Kamal**
**San Jose, California 95118 (US)**
• **WOLRICH, Gilbert**
**Framingham, Massachusetts 01701 (US)**
• **SYDIR, Jaroslaw**
**San Jose, California 95120 (US)**
• **FEGHALI, Wajdi**
**Boston, Massachusetts 02115 (US)**

(74) Representative: **Dunlop, Hugh Christopher et al**
**R.G.C. Jenkins & Co**
**26 Caxton Street**
**London SW1H 0RJ (GB)**

(56) References cited:
**US-A1- 2002 194 237     US-A1- 2003 065 696**

• **WALTER C D: "Improved linear systolic array for fast modular exponentiation" IEE PROCEEDINGS E. COMPUTERS & DIGITAL TECHNIQUES, INSTITUTION OF ELECTRICAL ENGINEERS. STEVENAGE, GB, vol. 147, no. 5, 28 September 2000 (2000-09-28), pages 323-328, XP006013930 ISSN: 0143-7062**
• **TENCA A F ET AL: "A SCALABLE ARCHITECTURE FOR MONTGOMERY MULTIPLICATION" CRYPTOGRAPHIC HARDWARE AND EMBEDDED SYSTEMS. 1ST INTERNATIONAL WORKSHOP, CHES'99. WORCESTER, MA, AUG. 12 - 13, 1999PROCEEDINGS, LECTURE NOTES IN COMPUTER SCIENCE, BERLIN : SPRINGER, DE, vol. VOL. 1717, 12 August 1999 (1999-08-12), pages 94-108, XP000989324 ISBN: 3-540-66646-X**
• **WALTER C D: "MONTGOMERY'S MULTIPLICATION TECHNIQUE: HOW TO MAKE IT SMALLER AND FASTER" CRYPTOGRAPHIC HARDWARE AND EMBEDDED SYSTEMS. INTERNATIONAL WORKSHOP, August 1999 (1999-08), pages 80-93, XP000952220**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. FIELD

The present invention relates generally to network security and, more specifically, to methods and apparatuses for performing modular exponentiations.

2. DESCRIPTION

Public key cryptography is a part of key exchange/connection setup protocols such as the Internet Key Exchange protocol (IKE) (used in IP security protocol (IPSEC)) and the Secure Sockets Layer protocol (SSL). Public key security schemes such as Diffie-Hellman key exchange, Rivest Shamir Adleman (RSA) ciphering, RSA digital signature, and digital signature authority (DSA) are commonly used for this purpose. Public key security schemes are known to be very computationally intensive. The computation that is at the heart of most public key security schemes is modular exponentiation with very large numbers. 512 bit and 1024 bit numbers (keys) are normally used these days and there is a desire to increase the key size. It is very likely that the size of the operands of the modular exponentiation operation will increase to 2048 and 4096 bit numbers and beyond in the near future. The Montgomery multiplication is a commonly used method for performing the modular exponentiation operations. In order to perform key exchange/connection setup at the rates required in today's networks, specialized modular exponentiation hardware is required. When the Montgomery multiplication is used, the specialized modular exponentiation hardware mainly comprises one or more Montgomery multiplication engines. The speed of the Montgomery multiplication engines affects the speed of performing key exchange/ connection setup in network communications. Therefore, it is desirable to improve the efficiency of a Montgomery multiplication engine (MME).

Additionally, because different entities in a network may use different key sizes and the public key size is increasing in general, modular exponentiation hardware needs to perform modular exponentiations for different key sizes. Accordingly, MMEs inside the modular exponentiation hardware need to perform multiplications of difference sizes, e.g., MMEs need to perform multiplications between 512 bit operands if the public key size is 512 bits, and need to perform multiplications between 1024 bit operands if the public key size is 1024 bits. An MME typically has a fixed size. For example, a 512-bit MME is designed to perform Montgomery multiplications for operands with a maximum of 512 bits. Theoretically, an MME of a large size may be used to perform Montgomery multiplications for operands of a smaller size (e.g., a 1024-bit MME may be used to perform Montgomery multiplications for 512-bit operands), but such a use is not efficient Thus, for efficiency purpose, MMEs of 10 different sizes should be used to perform modular exponentiations for 10 different key sizes, with MMEs of each size for a particular key size. With the key size increasing, it is hard for modular exponentiation hardware to accommodate any sized key with MMEs of the exact same size. Many network processors which have modular exponentiation hardware, especially those low or mid-end ones, typically have MMEs of relatively smaller sizes due to cost and die size concerns. An example of a MME can be found in US 2003/0065696. However, such network processors still need to support modular exponentiations for larger key sizes. Therefore, it is desirable to use MMEs of smaller sizes to perform Montgomery multiplications for operands of larger sizes.

BRIEF DESCRIPTION OF THE DRAWINGS

The features and advantages of the present invention will become apparent from the following detailed description of the present invention in which:

Figure 1 is a diagram illustrating a general network system;
Figure 2 is a flowchart illustrating an encrypted communicating process using a public key based security scheme (prior art);
Figure 3 shows pseudo code illustrating a process of performing a modular exponentiation using Montgomery multiplications in a public key based encryption process (prior art);
Figures 4A, 4B, and 4C show pseudo codes illustrating example processes of performing a Montgomery multiplication;
Figure 5 is a diagram illustrating an example implementation of a Montgomery multiplication;
Figure 6 is a table illustrating a process of scheduling Montgomery multiplications;
Figure 7 is a diagram illustrating a process of scheduling Montgomery multiplications for operands of larger sizes using multiple Montgomery multiplication engines of smaller sizes;
Figure 8 is a block diagram of an example system that performs modular exponentiations for larger key sizes by chaining multiple Montgomery multiplication engines of smaller sizes;
Figure 9 is a diagram illustrating a process of scheduling Montgomery multiplications for operands of larger sizes using a single Montgomery multiplication engine of a smaller size;
Figure 10 is a block diagram of an example system that performs modular exponentiations for larger key sizes using a single Montgomery multiplication engine of a smaller size;
Figure 11 is a flowchart illustrating an example process of performing modular exponentiations; and
Figure 12 is a diagram of a network system that incorporates a Montgomery multiplication based modular exponentiation module.

DETAILED DESCRIPTION

An embodiment of the disclosed techniques comprises a method and apparatus for performing modular exponentiations. The Montgomery multiplication is a commonly used method for performing the modular exponentiation operations, which may be the most computationally intensive part of a public key security scheme used for improving the security of network communications. A Montgomery multiplication may be performed through a number of iterations of one or more basic operations. Each basic operation may comprise an addition or a carry-save addition between two operands each having one or more bits. Typically the number of iterations equals to the key size, when the Montgomery multiplication is performed in an application of a public key security scheme. The key size in a public key based cryptographic application is typically 512 bits or 1024 bits in today's networks but is very likely to increase to 2048 bits or even higher. Even for a key with 512 bits, it is time-consuming to perform such a large number of basic operations (especially when a basic operation is an operation between two bits). According to an embodiment of the disclosed techniques, basic operations in an iteration may be grouped into multiple blocks. Operations involved in these blocks may be pipelined ("horizontal pipelining"). Additionally, blocks across different iterations may also be pipelined ("vertical pipelining"). Furthermore, two Montgomery multiplications may be interleaved and run on the same engine ("interleaving"). Using interleaving, horizontal pipelining, and vertical pipelining techniques, the efficiency of a Montgomery multiplication engine (MME) may be improved.

According to another embodiment of the disclosed techniques, multiple MMEs of smaller sizes may be chained together to perform Montgomery multiplications for operands of larger sizes. Yet according to another embodiment of the disclosed techniques, a single MME of a smaller size may be used to perform Montgomery multiplications for operands of larger sizes. Using the disclosed techniques, a network processor that have MMEs of smaller sizes may process public keys of larger sizes with improved efficiency.

Reference in the specification to "one embodiment" or "an embodiment" of the present invention means that a particular feature, structure or characteristic described in connection with the embodiment is included in at least one embodiment of the present invention. Thus, the appearances of the phrase "in one embodiment" appearing in various places throughout the specification are not necessarily all referring to the same embodiment.

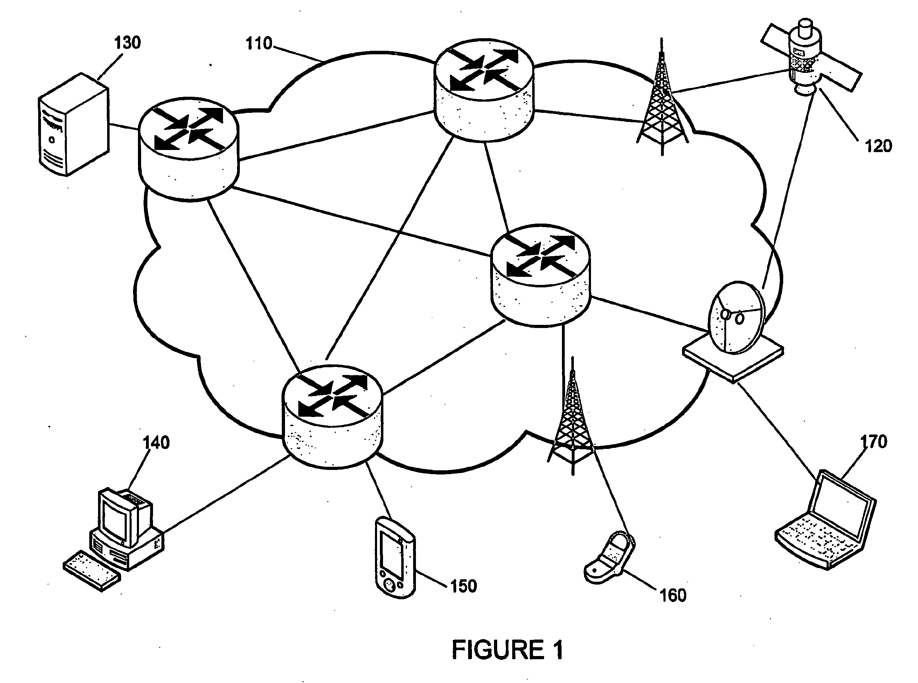

Figure 1 depicts a general network system 110 that supports a number of terminals.
The network system 110 may comprise a number of devices such as routers, switches, and bridges to facilitate data passage from one terminal to another. The network system may be a wireless system, an Ethernet system, any other systems, or a combination of different network systems. The network system may employ a satellite 120 to help connect one terminal to another terminal. The terminals of the network system may comprise servers (130), desktop computers (140), personal directory assistants (PDAs) (150), cell phones (160), laptop computers (170), or other devices. Data communicated among different terminals may include video, audio, messages, and other data. The network system may use key exchange/connection setup protocols such as IKE and SSL for communication security. Public key security schemes may be used as a part of such key exchange/connection setup protocols. To perform computationally intensive modular exponentiation for public key security schemes, Montgomery multiplications may be employed, which may be performed by one or more Montgomery multiplication engines ("MMEs"). To perform key exchange/connection setup at increasingly high rates for increasing key sizes required in always-evolving networks, it is desirable to improve the efficiency of the MMEs and to use MMEs of smaller sizes to perform Montgomery multiplications for operands of larger sizes.

A public-key cryptographic scheme is an asymmetric security scheme (a sender and a receiver use different keys). It involves a pair of keys-a public key and a private key-associated with an entity that needs to authenticate its identity electronically or to sign or encrypt data. Each public key is published through a certificate authority, and the corresponding private key is kept secret. Compared with a symmetric security scheme (wherein a sender and a receiver use the same key), a public-key security scheme requires more computation (because of modular exponentiations used) and is therefore not always appropriate for large amounts of data. However, it is possible to use a public-key scheme to encrypt and send a symmetric key, which can then be used to encrypt additional data. This is the approach used by some security protocols such as the SSL protocol. In addition to encryption, a public-key security scheme can also be used for digital signature applications.

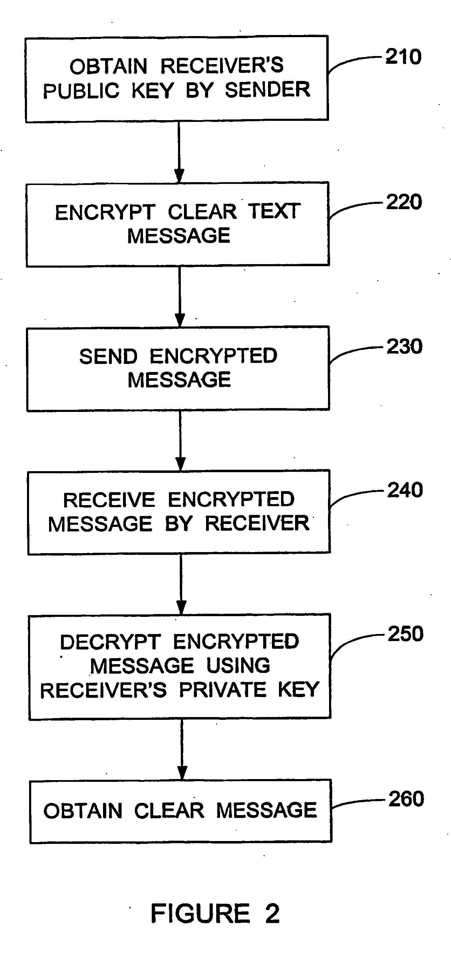

Figure 2 shows a flowchart of an encrypted communicating process using a public key based security scheme. In block 210, a sender may obtain a receiver's public key from a certificate authority. In block 220, the sender may use the public key to encrypt a clear text message. In block 230, the sender may send the encrypted message through a network. In block 240, the receiver may receive the encrypted message from the network. In block 250, the receiver may decrypt the received encrypted message using its private key. In block 260, the receiver may obtain the clear text message from the sender. Both the encryption process using the public key at the sender's side and the decryption process using the private key at the receiver's side involve a modular exponentiation, such as: $A^e$ (mod m), where A, e, and m denote the base, the exponent, and the modulus, respectively; and are all positive integers in a public key security scheme. It is very computationally intensive to perform a modular exponentiation using a conventional approach, which at least performs multiplication and modular reduction operations for e times. To make a modular exponentiation faster, a Montgomery multiplication based approach is typically used in a public key cryptographic system to perform the modular exponentiation.

To describe how a Montgomery multiplication is performed, it is necessary to introduce a concept of m-residue, where m is a modulus and is a k-bit integer. Let $r = 2^k$, and the Montgomery multiplication requires that r and m be relatively prime to each other. This requirement is satisfied if m is odd. The m-residue of an integer A < m as a = A • r (mod m). Given two m-residues a and b, the Montgomery product is defined as the m-residue:

$$o = a \cdot b \cdot r^{-1} \ (\text{mod } m), \qquad\qquad (1)$$

where $r^{-1}$ is the inverse of r modulo m, i.e., $r^{-1} \cdot r = 1$ (mod m); and b = B • r (mod m). In fact, o is the m-residue of the product O = A • B (mod m), since o = a • b • $r^{-1}$ (mod m) = A • r • B • $r^{-1}$ (mod m) = O • r (mod m).

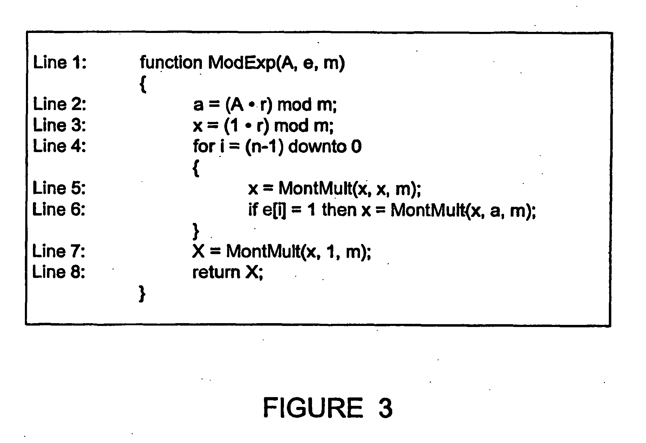

Figure 3 shows pseudo code illustrating a process of performing a modular exponentiation, $A^e$ (mod m), using Montgomery multiplications in a public key based encryption process. Let n be the number of bits in the exponent e. Line 1 shows a function of modular exponentiation, ModExp(A, e, m), which computes $A^e$ (mod m). The function includes operations illustrated from line 2 through line 8. In line 2, the m-residue (a) of the base (A) is obtained. In line 3, the m-residue (x) of the number (1) is obtained. Line 4 starts a loop which includes n iterations, starting from the most significant bit of e, and each iteration comprises operations illustrated in lines 5 and 6. In line 5, a Montgomery product between x and x is calculated and its result is used to update the value of x. In line 6, if the current bit of e, e[i] =1, the value of x is further updated with a Montgomery product between x itself and the m-residue of the base A. Thus, depending on the value of the exponent, e, there can be either one or two Montgomery multiplications to be done per bit in e. Line 7 computes X using its m-residue via the property of the Montgomery multiplication, i.e., MontMult(x, 1, m) = x • 1 • $r^{-1}$ (mod m) = X • r • $r^{-1}$ (mod m) = X (mod m), where X is the result of the modular exponentiation, $A^e$ (mod m). Line 8 returns the value of X.

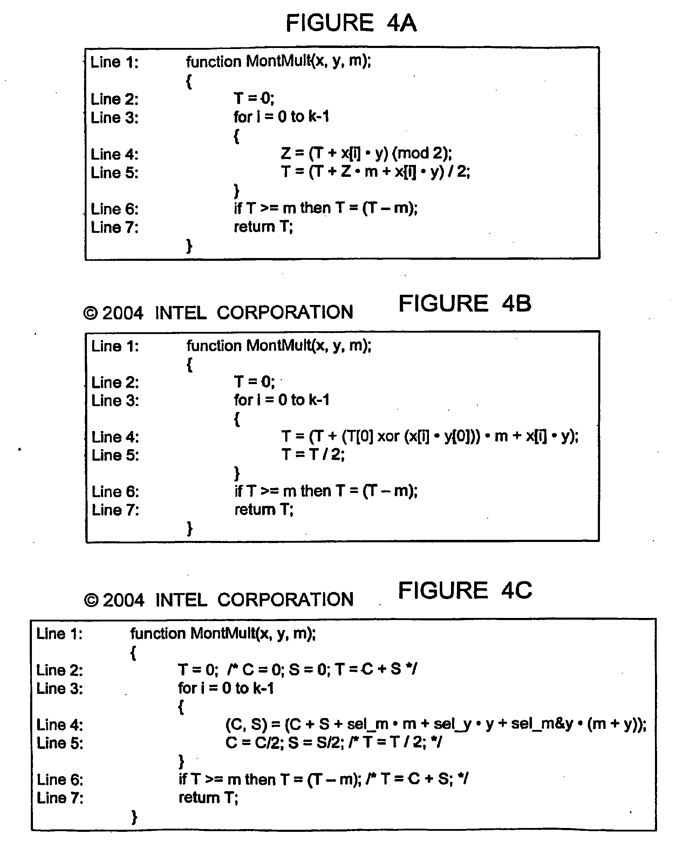

Figure 4A shows a pseudo code of an example process of performing a Montgomery multiplication. Line 1 shows that the function of a Montgomery multiplication, MontMult(x, y, m). The function takes three parameters, x, y, and m, where m is the same as the modulus in the modular exponentiation, $A^e$ (mod m), which MontMult is used to calculate. Parameters x, y, and m have the same number of bits (assume that the number of bits is k). For the convenience of description, a Montgomery multiplication with k-bit input parameters will be referred to as a k-size Montgomery multiplication. In line 2, a variable, T, which is used to store the Montgomery product between x and y, is initialized to 0. Line 3 starts k iterations of operations shown in lines 4 and 5. In line 4, a temporary result, Z, is obtained by (T + x[i] • y) (mod 2), where x[i] denotes the value of the $i^{th}$ bit of x. In line 5, the value of T is updated by (T + Z • m + x[i] • y) / 2, where the dividing by 2 operation is basically "right shift by 1 bit" operation. After executing lines 4 and 5 for k iterations, the value of the result, T, is bounded within the range of 0 to 2m. Since the Montgomery product between x and y should be less than m (in the range of 0 to m-1), line 6 checks if the value of the result, T, is within the required range of 0 to m-1; and if not, a correction is made. Line 7 returns the final result of T, which is the Montgomery product between x and y.

It is noted that addition of (Z • m) in line 4 of Figure 4A is conditional. The addition occurs only when the result of (T + x[i] • y) (mod 2) is odd. Whether the result of (T + x[i] • y) (mod 2) is odd or not depends only on x[i] and the lowest bits of T and y (i.e., T[0] and y[0]). Thus, the pseudo code shown in Figure 4A may be re-written as a pseudo code shown in Figure 4B. It can be seen from Figure 4B, especially lines 4 and 5, that a Montgomery multiplication mainly include k additions (shown in line 4) and k shift operations (shown in line 5), which are relatively simpler and relatively easier to be implemented in hardware than ordinary multiplications and modular reduction operations. Therefore, using Montgomery multiplications is potentially faster and simpler than ordinary multiplications and modular reduction operations to compute a modular exponentiation.

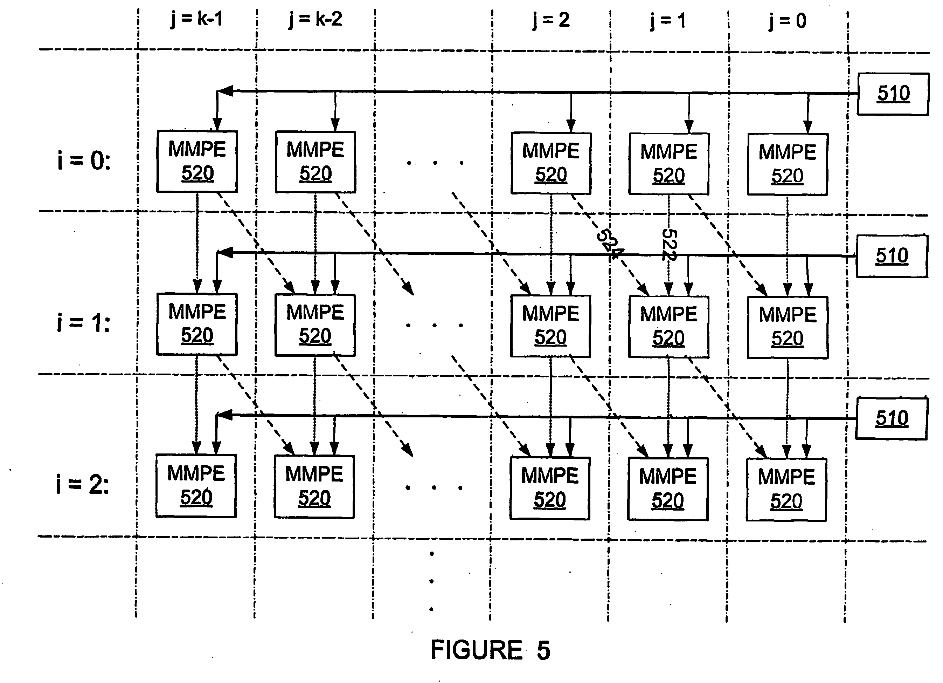

Although a glance of line 4 in Figure 5 shows that this line involves additions of three operands: T, (T[0] xor (x[i] • y[0])) • m ("xor" denotes exclusive or operation), and x[i] • y, a more detailed analysis can show that this line may actually be implemented between two operands and thus may be performed through carry-save additions. One of these two operands is T, and the other is one of m, y, and (m+y), because only one of these three values is added with T during each iteration. Which value among m, y, and (m+y) is added with T depends on values of (T[0] xor (x[i] · y[0])) and x[i] as shown in the following table:

| Selection signals | T[0] xor (x[i] · y[0]) | x[i] | Value selected |
|---|---|---|---|
| sel_nothing | 0 | 0 | Nothing |
| sel_y | 0 | 1 | y |
| sel_m | 1 | 0 | m |
| sel_m&y | 1 | 1 | m+y |

In fact, a multiplexer may be used to output four mutually exclusive selection signals for each iteration: sel_nothing, sel_y, sel_m, and sel_m&y, based on values of (T[0] xor (x[i] • y[0])) and x[i]. Because the value of (T[0] xor (x[i] • y[0])) determines if the modulus, m, should be added with T, (T[0] xor (x[i] • y[0])) will be referred to as a modulus selection indicator hereinafter. Under sel_nothing, nothing will be done and the value of previous T passes through; under sel_y, only the value of y is added with T; under sel_m, only the value of m is added with T; and under sel_m&y, the value of (m+y) is added with T. Figure 4C shows a pseudo code illustrating an example process of performing a Montgomery multiplication through carry-save additions. In Figure 4C, the variable T is represented by a sum of a carry variable, C, and a sum variable, S. Such an implementation may improve the performance of a Montgomery multiplication. Furthermore, bits in each of T, y, m, and m+y may be split into multiple bit groups with each bit group having a small number of bits, and for each iteration the carry-save addition between T and one value selected from 0, y, m, and m+y, may be performed based on these bit groups (e.g., if each bit group only contains 1 bit, the carry-save addition may be performed on a bit basis).

Figure 5 illustrates an example implementation of a Montgomery multiplication. A Montgomery multiplication engine (MME) that uses this implementation may comprise k rows with each row representing one iteration of operations in lines 4 and 5 as shown in Figure 4C. Each row comprises k Montgomery multiplication processing element ("MMPE") 520. For the convenience of description, MMPE(u, v) will be used to denote the MMPE at the intersection of row "i = u" and column "j = v;" and the number of MMPEs in each row is will be referred to as the width of the MME. Each MMPE performing a carry-save addition between one bit of T (as shown in Figure 4C) and a corresponding bit of the selected value (one of 0, y, m, and m+y). For example, in a column corresponding to j = 2, each MMPE performs a carry-save addition between the 3rd bit of T and the 3rd bit of the selected value. The value of (m+y) may be pre-calculated before the first iteration starts because both the value of m and the value of y are available before any iteration starts. Each row also comprises a selection mechanism 510 to compute the modulus selection indicator, (T[0] xor (x[i] • y[0])), and to make a selection among 0, y, m, and (m+y). The selection mechanism 510 may comprise a multiplexer to select one value among 0, y, m, and (m+y) and output this selected value for the use by each of k MMPEs in the row. In one embodiment, the selection mechanism may calculate a value of the modulus selection indicator, and propagate the value to each MMPE in the row. Each MMPE includes a multiplexer to select a value among 0, y, m, and (m+y) based on the value of the modulus selection indicator and x[i].

In the first row (i = 0), each MMPE may simply pass through the bit in the selected value as the sum value of the output because T is initialized as 0 in line 2 (as shown in Figure 4C). The output data from carry-save additions in the first row are shifted to right by one bit because of the division operation in line 5 as shown in Figure 4C. In the second row (i =1) and forward, each MMPE takes a carry value and a sum value from MMPEs in the first raw and added with a corresponding bit of a value selected from 0, y, m, and (m+y), by the selection mechanism 510 in the second row. For example, the MMPE(1,1) takes the carry value from the MMPE(0, 0), the sum value of MMPE(0, 1) as well as the value selected by the selection mechanism 510 as input. Because of right shift operations in line 5 as shown in Figure 4C, MMPE(1,1) instead takes the carry value from MMPE(0, 1) 522 and the sum value from MMPE(0, 2) 524 as well as the selected value as input. Since the values of carry and sum are shifted right by one bit position during each iteration, each iteration hence has a limited effect on the next iteration. For example, iteration 1 (i = 1), bit 0 (MMPE(1, 0)) depends on iteration 0, bits 0 (MMPE(0, 0)) and 1 (MMPE(0, 1)). Iteration 2, bit 0 (MMPE(2, 0)) depends on bits 0, 1, and 2 of iteration 0 (MMPE(0, 0), MMPE(0, 1), and MMPE(0, 2)), and bits 0 and 1 of iteration 1 (MMPE(1, 0) and MMPE(1, 1)). In general, iteration u, bit v (MMPE(u, v)) would depend on bits v to v+u of iteration 0 (MME(0, v) to MMPE(0, v+u)), bits v to v+u-1 of iteration 1 (MMPE(1, v) to MMPE(1, v+u-1)), and so on.

Ideally, there should be a total of k rows of MMPEs and each row has k MMPEs, resulting in a total of $k^2$ MMPEs to implement a k-size Montgomery multiplication. In reality, however, a total of $k^2$ MMPEs may require a large die size, especially where k is large. Thus, only a few rows of k MMPEs (e.g., 8 rows) may actually be used to implement a k-size Montgomery multiplication. These rows may be reused to complete the total of k iterations of carry-save additions needed by a k-size Montgomery multiplication.

The size of a Montgomery multiplication is the same as the key size in a public key security scheme, which is typically 512 bits or higher. This means that there may be at least 512 MMPEs in each row in Figure 5. The carry propagation across the width of an MME may take some time. Additionally, propagation of the value of the modulus selection indicator or a selected value among 0, y, m, and (m+y) across the width of the MME may also cause some delays. Such propagation delays may limit the throughput of an MME. One approach to improve the throughput of an MME may be pipelining carry-save additions performed by MMPEs. The carry-save additions may be pipelined both across the width of an MME ("horizontal pipelining") and across iterations ("vertical pipelining").

Because of propagation delays, operations involved in one iteration may not be completed in one cycle. Under horizontal pipelining, k MMPEs in a row may be grouped into several blocks so that operations involved in each block may be performed within one clock cycle. Operations involved in each block may be pipelined across blocks. For example, for a 512-size Montgomery Multiplication, a row of 512 MMPEs may be grouped into 5 blocks: block 1 including MMPES for bits 0-7, block 2 including MMPEs for bits 8-127, block 3 including MMPEs for bits 128-255, block 4 including MMPEs for bits 256-383, and block 5 including MMPEs for bits 384-511. In block 1 includes less bitwise carry-save additions because the value of the modulus selection indicator is also calculated in block 1 (this value needs to be calculated before the carry-save addition for bit 0). In one embodiment, the value of the modulus selection indicator calculated in block 1 may be propagated to other blocks so that MMPEs there may select one value among 0, y, m, and (m+y) using a multiplexer associated with each MMPE. In another embodiment, this value may be used along with x[i] to select one value among 0, y, m, and (m+y) via a multiplexer and then propagate the selected value to other blocks. Operations involved in these 5 blocks (for a 512-size Montgomery multiplication) may be pipelined to improve the MME.

There is a similar limitation on the number of iterations that can be done every cycle. Under vertical pipelining, a group of iterations may be performed for a horizontal block within one cycle. The size of the group may be different for different implementations. For example, the size of the group may be 8 so that 8 iterations may be performed for a horizontal block in one cycle. Because of inter-iteration dependency, the MMPE(7, 7) depends on results from MMPE (0, 7) to MMPE(0, 14), MME(1, 7) to MMPE(1, 13), ..., and MMPE(6, 7) to MMPE(6,8). If block 1 is defined as operations involved in bits 0-7, then to be relatively independent, operations involved 8 iterations for block 1 should also include operations performed by MMPE(0, 7) to MMPE(0, 14), MMPE(1, 7) to MMPE(1, 13), ..., and MMPE(6, 7) to MMPE(6,8). In general, M iterations for block w should also include those operations that are needed to make operations involved in M iterations for block w relatively independent.

Although Figure 5 illustrates one embodiment in which each MMPE performs a carry-save addition between two bits, an MMPE is not required to perform a bitwise carry-save addition only. An MMPE may perform a basic operation as required by a Montgomery multiplication. Such a basic operation may comprise a bitwise carry-save addition, a carry-save addition between two operations each having more than one bit, an addition between two operations each including one or more bits, or any other operation(s). The application of horizontal and vertical pipelining techniques does not depend on what particular operations an MMPE performs.

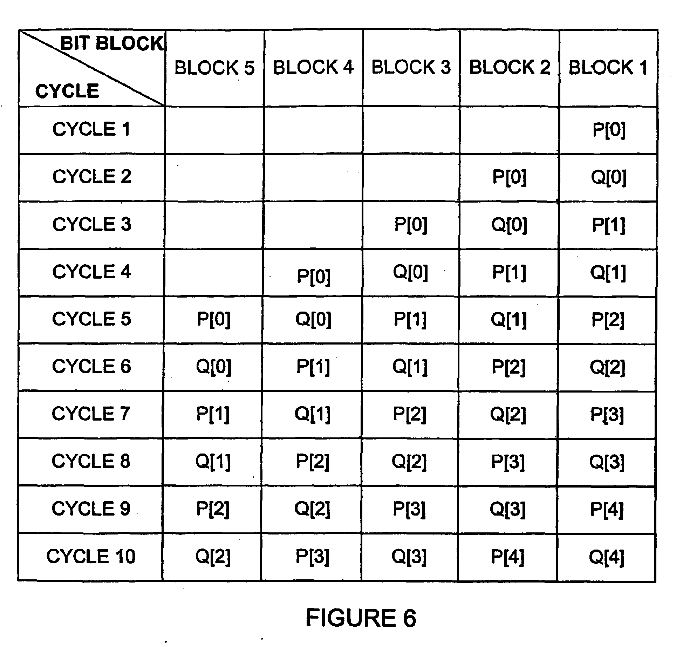

Figure 6 is a table illustrating how to schedule two Montgomery multiplications using interleaving, and horizontal and vertical pipelining techniques. Assume that the total bitwise carry-save additions in each iteration are grouped into 5 horizontal blocks and 8 iterations may be grouped together so that 8 iterations may be performed for a horizontal block in one cycle. Let P[i] denote operations involved in iterations ix8 through (i+1)x8-1 for a horizontal block of Montgomery multiplication P (e.g., P[0] denote operations involved in iterations 0 through 7 for a horizontal block of Montgomery multiplication P). Q[i] has the same meaning as P[i], but is used for a different Montgomery multiplication Q. In cycle 1, P[0] of block 1 (i.e., operations involved in iterations 0-7 for block 1 of P) is performed. In cycle 2, P[0] of block 2 (i.e., operations involved in iterations 0-7 for block 2 of P) may be performed. However, P[1] of block 1 (i.e., operations involved in iterations 8-15 for block 1 of P) cannot be performed because P[1] of block 1 depend on results from P[0] of block 2. To fully make use of the capacity of an MME, another Montgomery multiplication, Q, for another unrelated modular exponentiation may be performed. As a result, two unrelated Montgomery multiplications, P and Q, may be interleaved to improve the efficiency of an MME. Thus, in cycle 2, although P[1] of block 1 cannot be performed because of inter-iteration dependency, Q[0] of block 1 (i.e., operations involved in iterations 0-7 for block 1 of Q) may be performed.

In cycle 3, P[0] of block 3 may be performed and Q[0] of block 2 may be performed. In this cycle, P[1] of block 1 may be performed because the results from P[0] of block 2 are now available. In cycle 4, P[0] of block 4 and P[1] of block 2 may be performed, but P[2] of block 1 cannot be performed because P[2] of block 1 depend on results of P[1] of block 2. Also in this cycle, Q[0] of block 3 and Q[1] of block 1 may be performed. In cycle 5, P[0] of block 5, P[1] of block 3, and P[2] of block 1 may be performed. In the meanwhile, Q[0] of block 4 and Q[1] of block 2 may be performed. Because of horizontal pipelining, different horizontal blocks (i.e., block 1, block 3, and block 5) of Montgomery multiplication P are performed in the same cycle (cycle 5). Additionally, because of vertical pipelining, different iteration groups (i.e., iterations 0-7 for block 5, iterations 8-15 for block 3, and iterations 16-23 for block 1) of the same Montgomery multiplication P are also performed in the same cycle (cycle 5). Furthermore, because of interleaving, Q[0] of block 4 and Q[1] of block 2 for another unrelated Montgomery multiplication Q are also performed in cycle 5. The process of performing Montgomery multiplications, P and Q, through interleaving, and horizontal and vertical pipelining may continue from cycle 6 and forward. Results from 8 iterations for each horizontal block may be buffered and used by next cycles. Once these results are used by all dependent blocks, they may be cleared from a buffer so that the buffer may be used by other results.

Although both the horizontal and vertical pipelining technique and the interleaving technique are described above along with Figure 6, they are not required to be used together in one embodiment For example, the horizontal pipelining and/or vertical pipelining may be used in one embodiment without the interleaving technique; in another embodiment, the interleaving technique may be used without the horizontal and vertical pipelining techniques.

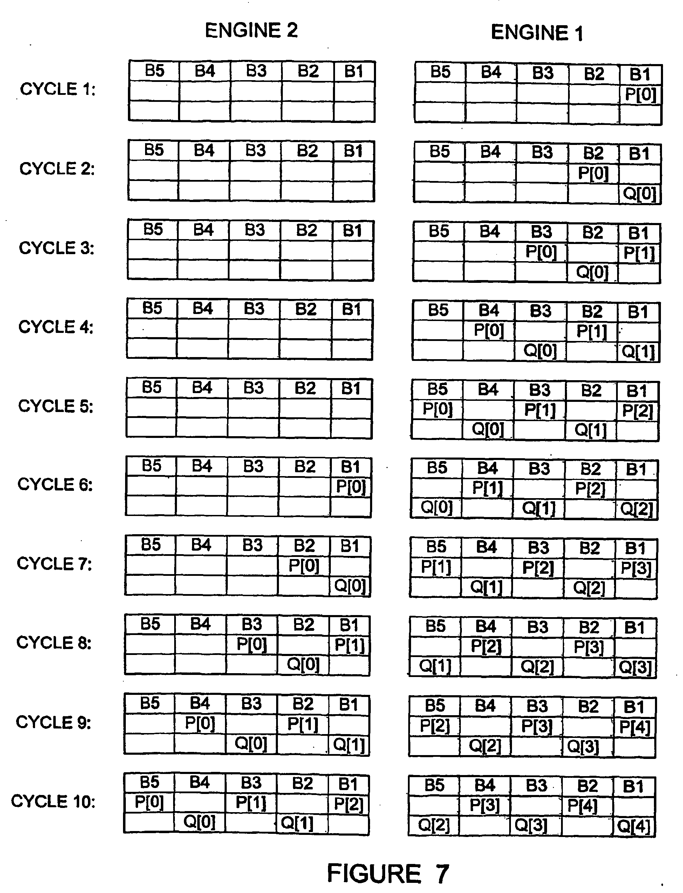

Using interleaving, horizontal pipelining, and vertical pipelining techniques, multiple MMEs of smaller sizes may be chained together to perform Montgomery multiplications for operands of larger sizes. Figure 7 illustrates a process of scheduling Montgomery multiplications for operands of larger sizes using multiple MMEs of smaller sizes, in which Bi stands for horizontal block i. As an example, two 512-bit MMEs are used to perform 1024-bit Montgomery multiplications in Figure 7. Each of two 512-bit MMEs has five horizontal blocks, formed in a similar manner as shown in Figure 6.

From cycle 1 to cycle 5, engine 1 may be scheduled in the same way as shown in Figure 6 (for cycle 1 to 5). In Figure 7, two interleaved Montgomery multiplications, P and Q, are shown in two separate rows, while in Figure 6, they are shown in the same row. Engine 2 is idle during the first 5 cycles. For P, the first 512 bits in iterations 0-7 have been processed after cycle 5. In cycle 6, there is crossover between the two engines. Engine 2 is used in cycle 6 and will process the second half of bits in P and Q (i.e., bits 512-1023) from cycle 6 and forward. Thus, in engine 2, B1 corresponds to bit positions 512-519 (block 6) of P and Q; B2 corresponds to bit positions 520-639 (block 7); B3 corresponds to bit positions 640-767 (block 8); B4 corresponds to bit positions 768-895 (block 9); and B5 corresponds to bit positions 896-1023 (block 10). In other words, B1-B5 in engine 2 correspond to block 6 through block 10 of P and Q, respectively.

In cycle 6, P[0] of block 6 (i.e., operations for bit positions 512-519 of iterations 0-7 of P) is performed in engine 2, while P[1] of block 4, P[2] of block 2, Q[0] of block 5, Q[1] of block 3, and Q[2] of block 1 may be performed in engine 1. In cycle 7, P[0] of block 7 (i.e., operations in iterations 0-7 for bit positions 520-639 ofP) may be performed in engine 2. However, P[1] of block 6 (i.e., operations in iterations 8-15 for bit positions 512-519 of P) cannot be performed in engine 2 because P[1] of block 6 depend on results from P[0] of block 7. Instead, in cycle 7, Q[0] of block 6 (i.e., operations in iterations 0-7 for bit positions 512-519 of Q) may be performed in engine 2. Also in cycle 7, P[1] of block 5, P[2] of block 3, P[3] of block 1, Q[1] of block 4, and Q[2] of block 2 may be performed in engine 1. It can be seen that crossover from engine 1 to engine 2 is smooth for both P and Q, without extra operations required.

In cycle 8, P[0] of block 8, P[1] of block 6, and Q[0] of block 7 may be performed in engine 2, while P[2] of block 4, P[3] of block 2, Q[1] of block 5, Q[2] of block 3, and Q[3] of block 1 may be performed in engine 1. In cycle 9, P[0] of block 9, P[1] of block 7, Q[0] of block 8, and Q[1] of block 6 may be performed in engine 2, while P[2] of block 5, P[3] of block 3, P[4] of block 1, Q[2] of block 4, and Q[3] of block 2 may be performed in engine 1. In cycle 10, P[0] of block 10, P[1] of block 8, P[2] of block 6, Q[0] of block 9, and Q[1] of block 7 may be performed in engine 2, while P[3] of block 4, P[4] of block 2, Q[2] of block 5, Q[3] of block 3, and Q[4] of block 1 may be performed in engine 1. From cycle 10 and forward, both horizontal pipeline (10 horizontal blocks for each of P and Q across two engines) and vertical pipeline (4 groups of iterations for each ofP and Q across two engines) are full, and the process may continue until both P and Q are completed.

Although Figure 7 shows two engines with the same size, engines with different sizes may also be chained together to perform Montgomery multiplications for operands of large sizes. For example, a M-bit MME, a K-bit MME, and a N-bit MME may be chained together to perform Montgomery multiplications for operands of (M+K+N) bits, which may be scheduled in a manner similar to the one described above. Additionally, although both the horizontal and vertical pipelining technique and the interleaving technique are described above along with Figure 7, they are not required to be used together in one embodiment. For example, the horizontal pipelining and/or vertical pipelining may be used in one embodiment without the interleaving technique; in another embodiment, the interleaving technique may be used without the horizontal and vertical pipelining techniques.

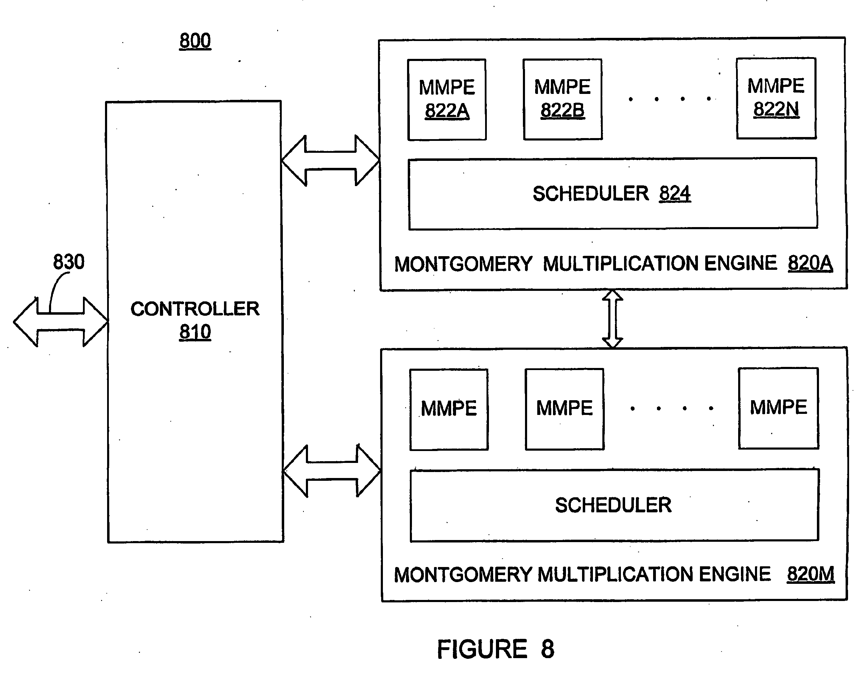

Figure 8 depicts an example system 800 that performs modular exponentiations for larger key sizes by chaining multiple Montgomery multiplication engines of smaller sizes.

The system 800 may comprise a controller 810 and a plurality of MMEs 820 (e.g., 820A, ..., 820M). An MME (e.g., 820A) may comprise multiple MMPEs 822 (e.g., 822A, ...822N). Each MMPE may perform a basic operation (e.g., an addition or a carry-save addition between two operands each including one or more bits). These MMPEs may form several rows with each row comprising multiple MMPEs, enough to compute basic operations for one iteration of a Montgomery multiplication. MMPEs between two adjacent rows may have similar inter-row dependencies as shown in Figure 5. Rows of MMPEs may be reused across iterations. In one embodiment, MMPEs might not be arranged in a way (e.g., in rows) similar to that as shown in Figure 5, but still perform similar functions as those MMPEs in Figure 5 do.

An MME (e.g., 820A) may also comprise a scheduler 824 to schedule operations required by a Montgomery multiplication among components inside the MME. For example, the scheduler 824 may interleave two Montgomery multiplications for two unrelated modular exponentiations into the MME. Additionally, the scheduler 824 may schedule the MME components such that process of performing each Montgomery multiplication may be pipelined both horizontally and vertically in a manner as described in Figure 6. Additionally, an MME may comprise other components to perform other operations required to complete a Montgomery multiplication. For example, the MME may comprise a component to initialize an intermediate result (e.g., set T = 0 as show in line 2 of Figure 4C), to pre-calculate (m+y) before any iteration, as shown in Figure 4C), and to calculate a modulus selection indicator in the beginning of each iteration, and so on.

The controller may accept input parameters and produce final results for one or more modular exponentiations through connection 830. The controller may prepare and provide input parameters for all Montgomery multiplications necessary to complete the desired modular exponentiations. Based on the key size of the modular exponentiations, the controller may select one MME to perform desired Montgomery multiplications if such an MME is available; otherwise, the controller may select more than one MMEs and chain them together to perform the desired multiplications. The controller 810 may chain some of the plurality of MMEs 820 together to perform Montgomery multiplications for operands of larger sizes. For example, two M-bit MMEs may be chained together to perform Montgomery multiplications for operands of 2M bits. An M-bit MME and an N-bit MME may be chained together to perform Montgomery multiplications for operands of (M+N) bits.

The controller 810 may facilitate data flow among the chained MMEs. The controller may also instruct scheduler in each of the chained MMEs so that each MME can correctly schedule Montgomery multiplications of larger sizes using the interleaving, horizontal pipelining, and vertical pipelining techniques as described in Figure 6. Additionally, the controller may assume a portion of functions from schedulers in the chained MMEs, e.g., initialization of an intermediate result (e.g., set T = 0 as show in line 2 of Figure 4C), pre-calculation of (m+y) before any iteration starts, as shown in Figure 4C), and post-processing output data from iterations to produce a final result for a Montgomery multiplication. Moreover, the controller may control MMEs to perform all Montgomery multiplications necessary to complete the desired modular exponentiations.

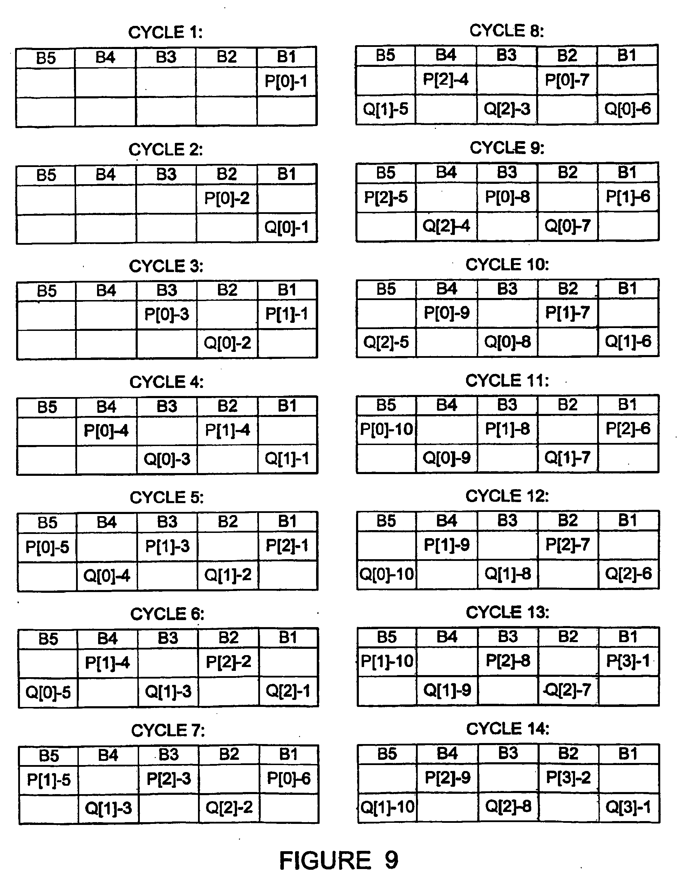

Figure 9 illustrates a process of scheduling Montgomery multiplications for operands of larger sizes using a single Montgomery multiplication engine of a smaller size. Assume that the MME shown in Figure 9 is a 512-bit MME and is used to perform 1024-bit Montgomery multiplications. The MME has five horizontal blocks, formed in a similar manner as shown in Figure 6. To make use of these five horizontal blocks of the MME, a 1024-bit Montgomery multiplication is divided into 10 bit blocks: bits 0-7 as block 1, bits 8-127 as block 2, bits 128-255 as block 3, bits 256-383 as block 4, bits 384-511 as block 5, bits 512-519 as block 6, bits 520-639 as block 7, bits 640-767 as block 8, bits 768-895 as block 9, and bits 896-1023 as block 10. In Figure 9, "P[i]-j" denotes operations involved in iterations ix8 through (i+1) x8-1 for block j of a 1024-bit Montgomery multiplication P (e.g., P[0]-1 denote operations involved in iterations 0 through 7 for block 1 of Montgomery multiplication P). Although assumption is made that operations involved in 8 iterations for a block can be performed within one cycle, in different implementations the block size may be different and the number of iterations may also be different Q[i]-j has the same meaning as P[i], but is used for a different Montgomery multiplication Q.

From cycle 1 to cycle 6, the MME may be scheduled in the same way as shown in Figure 6 (for cycle 1 to 6). In Figure 9, two interleaved Montgomery multiplications, P and Q, are shown in two separate rows, while in Figure 6, they are shown in the same row. In cycle 7, either the execution of P[3]-1 (bits 0-7) or P[0]-6 (bits 512-519) can be scheduled for B1 of the MME. Instead of scheduling P[3]-1, P[0]-6 is scheduled for B1 of the MME in cycle 7 as such scheduling allows for an already started operation to complete. In cycle 8 through 12, execution of P[0] for different horizontal blocks is scheduled. Execution of P[0] for all 10 horizontal blocks is completed at the end of cycle 12. In cycle 13, B1 of the MME is empty because it cannot be filled by any of the currently executing operations. Hence a new set of operations P[3]-1 (bits 0-7) may be scheduled for B1 of the MME. At the end of cycle 13, execution of P[1] for all 10 horizontal blocks is completed. In cycle 14, execution of P[3] for block 2 (i.e., P[3]-2) may be scheduled for B2 of the MME. At the same time, execution of Q[3]-1 (bits 0-7) may be scheduled for B1 of the MME. The scheduling process may continue until both P and Q are completed.

In one embodiment, a non-conflicting higher order bit positions of P (higher horizontal blocks of P) may be scheduled instead of interleaving an unrelated Montgomery multiplication Q with P. This embodiment may allow for a lower latency operation of the MME. Additionally, although both the horizontal and vertical pipelining technique and the interleaving technique are described above along with Figure 9, they are not required to be used together in one embodiment. For example, the horizontal pipelining and/or vertical pipelining may be used in one embodiment without the interleaving technique; in another embodiment, the interleaving technique may be used without the horizontal and vertical pipelining techniques.

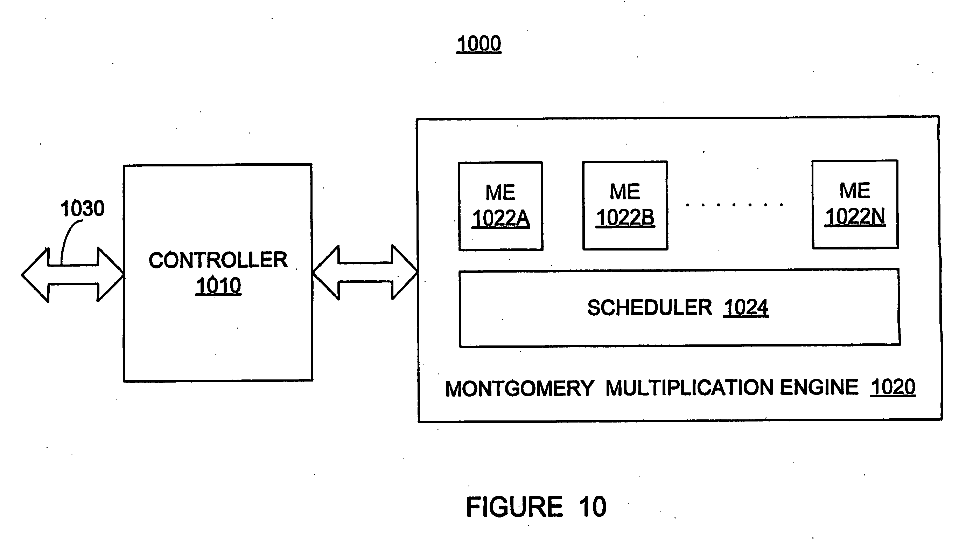

Figure 10 depicts an example system 1000 that performs modular exponentiations for larger key sizes using a single Montgomery multiplication engine of a smaller size.

The system 1000 may comprise a controller 1010 and at least one MME (e.g.,1020). The structure of an MME is similar to the structure of an MME as described in Figure 8, that is, MME 1020 may comprise multiple MMPEs 1022 (e.g., 1022A, ...1022N) and a scheduler 1024. Functions of an MMPE (e.g., 1022A) are similar to those of an MMPE (e.g., 822A) as described in Figure 8; and functions of the scheduler 1024 are similar to those of the scheduler 824 as described in Figure 8.

The controller 1010 may accept input parameters and produce final results for one or more modular exponentiations through connection 1030. The controller may prepare and provide input parameters for all Montgomery multiplications necessary to complete the desired modular exponentiations. If there is an MME in the system 1000 whose size matches the key size of the desired modular exponentiations, the controller may select this MME to perform desired Montgomery multiplications. If there are multiple MMEs whose sizes are smaller than the key size but can be added together to match the key size, the controller may chain these MMEs together to perform the desired Montgomery multiplications. If there is a single MME whose size is smaller than the key size, the controller may use this single small-sized MME to perform the desired multiplications by scheduling operations in a way similar to that illustrated in Figure 10. For example, an M-bit MME may be used to perform Montgomery multiplications whose size is 2M bits or less (but within the range of M to 2M). The controller may select more than one method to perform Montgomery multiplications in parallel.

The controller 1010 may facilitate data flow among the chained MMEs. The controller may instruct the scheduler in an MME to be used to perform larger-sized Montgomery multiplications so that this MME can correctly schedule such multiplications, using the interleaving, horizontal pipelining, and vertical pipelining techniques as described in Figure 6. Additionally, the controller may assume a portion of functions from the scheduler in such an MME, e.g., initialization of an intermediate result (e.g., set T = 0 as show in line 2 of Figure 4C), pre-calculation of (m+y) before any iteration starts, as shown in Figure 4C), and post-processing output data from iterations to produce a final result for a Montgomery multiplication. Moreover, the controller may control MMEs to perform all Montgomery multiplications necessary to complete the desired modular exponentiations.

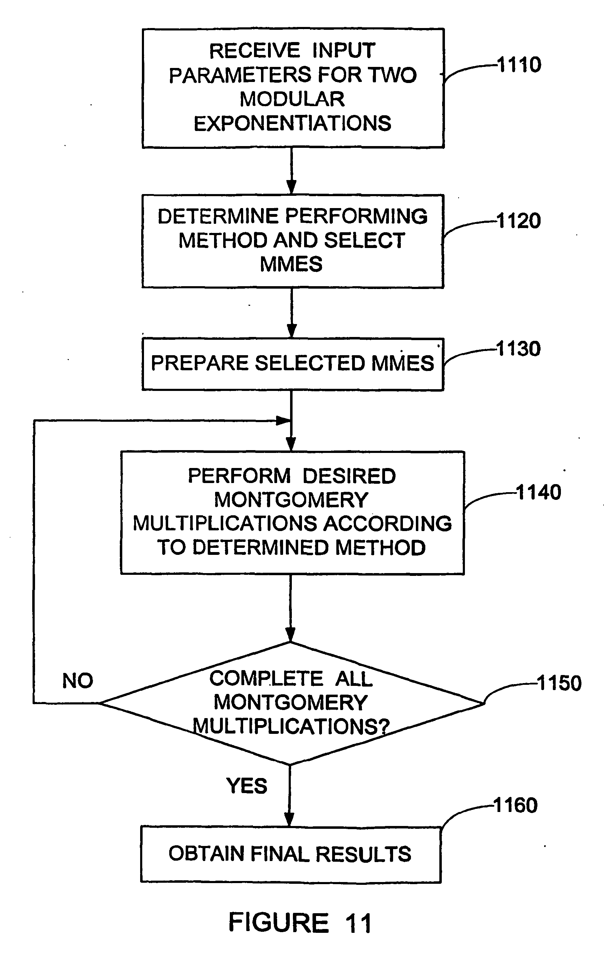

Figure 11 illustrates an example process of performing modular exponentiations. In block 1110, input parameters for two modular exponentiations with the same key size may be received. If two modular exponentiations with the same key size cannot be found, some pre-processing may be needed to make them appear to have the same key size, or simply compute them one by one without interleaving. In block 1120, a method for performing the desired modular exponentiations may be determined based on their key size and availability of MMEs in the system. For example, if there is an MME whose size matches the key size of the modular exponentiations, this MME may be selected to perform Montgomery multiplications for the modular exponentiations; otherwise, multiple MMEs whose sizes are smaller than the key size may be selected and chained together to perform the desired Montgomery multiplications, if there are such MMEs available; and otherwise, a single MME whose size is smaller than the key size may be selected to perform the desired Montgomery multiplications. More than one method may be selected to perform Montgomery multiplications for a modular exponentiation in parallel.

Additionally, which performing method is determined and which MME(s) is/are selected may also depend on other factors such as priority of modular exponentiations and physical connections between MMEs. For example, even if there is an MME available whose size matches the key size, this MME may be used by other modular exponentiations that have higher priority than the desired modular exponentiations. In this case, a performing method other than using a matched MME may be used. Additionally, even if there are multiple MMEs available whose sizes are smaller than the key size (but there is no MME available whose size matches the key size), necessary physical connections may lack for chaining them together to perform the desired modular exponentiations. In that case, a single MME whose size is smaller than the key size may be selected to perform the desired operations.

In block 1130, the selected MMEs may be prepared to perform the desired Montgomery multiplications. For example, if the selected MMEs need to be chained together, some connections may need to be made (e.g., making connections through switches). Additionally, input data may be prepared for each Montgomery multiplication based at least in part on the input parameters of the modular exponentiations. In block 1140, desired Montgomery multiplications may be performed using the determined method. For example, if an MME of a size matched to the key size is used, each Montgomery multiplication may be scheduled in a way similar to that described in Figure 6. If multiple MMEs whose sizes are smaller than the key size are used via chaining, each Montgomery multiplication may be scheduled in a way similar to that described in Figure 7. If a single MME whose size is smaller than the key size is used, each Montgomery multiplication may be scheduled in a way similar to that described in Figure 9. In block 1150, a decision whether all Montgomery multiplications required to complete the desired modular exponentiations may be made (as shown in Figure 3, a modular exponentiation requires multiple Montgomery multiplications to complete). If the answer is "yes," a final result may be obtained for each desired modular exponentiation in block 1160; otherwise, operations involved in block 1150 may be iterated until all Montgomery multiplications are completed.

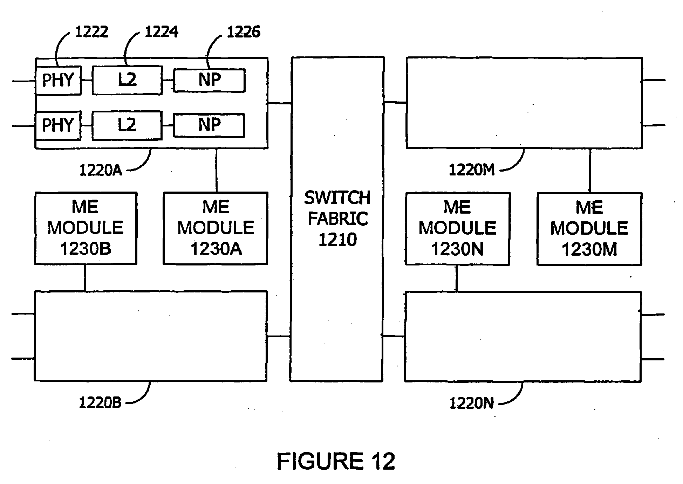

Figure 12 is a diagram of a network system that incorporates a Montgomery multiplication based modular exponentiation module. The system may comprise a collection of line cards 1220 ("blades") interconnected by a switch fabric 1210 (e.g., a crossbar or shared memory switch fabric). Individual line cards may be located in the same physical location or different physical locations (e.g., different cities). The switch fabric, for example, may conform to Common Switch Interface (CSIX) or other fabric technologies such as HyperTransport, Infiniband, Peripheral Component Interconnect (PCI), Packet-Over-SONET (Synchronous Optic Network), RapidIO, and/or UTOPIA (Universal Test and Operations PHY (Physical Layer) Interface for ATM).

Individual line cards (e.g., 1220A) may include one or more physical layer (PHY) devices 1222 (e.g., optic, wire, and wireless PHYs) that handle communication over network connections. The PHYs translate between the physical signals carried by different network mediums and the bits (e.g., "0"-s and "1"-s) used by digital systems.
The line cards 1220 may also include framer devices (e.g., Ethernet, Synchronous Optic Network (SONET), High-Level Data Link (HDLC) framers or other "layer 2" devices) 1224 that can perform operations on frames such as error detection and/or correction. The line cards 1220 shown may also include one or more network processors 1226 that perform packet processing operations for packets received via the PHY(s) 1222 and direct the packets, via the switch fabric 1210, to a line card providing an egress interface to forward the packet. Potentially, the network processor(s) 1226 may perform "layer 2" duties instead of the framer devices 1224.

The network processor(s) 1226 may be an Intel® Internet eXchange network Processor (IXP) or other network processors featuring different designs. The network processor features a collection of packet processing engines on a single integrated circuit.
Individual engines may provide multiple threads of execution. Additionally, the network processor includes a core processor (that is often programmed to perform "control plane" tasks involved in network operations. The core processor, however, may also handle "data plane" tasks. The network processor 1226 also features at least one interface that can carry packets between the processor and other network components. For example, the processor can feature a switch fabric interface 1210 that enables the processor 1226 to transmit a packet to other processor(s) or circuitry connected to the fabric. The processor(s) 1226 can also feature an interface that enables the processor to communicate with physical layer (PHY) and/or link layer devices (e.g., MAC or framer devices). The processor 1226 also includes an interface (e.g., a Peripheral Component Interconnect (PCI) bus interface) for communicating, for example, with a host or other network processors. Moreover, the processor 1226 also includes other components shared by the engines such as memory controllers a hash engine, and internal scratchpad memory.

As shown in Figure 12, each line card 1220 may be operably coupled with at least one Modular Exponentiation (ModExp) module 1230 (e.g., 1230A) that comprises at least one MME to perform Montgomery multiplications for modular exponentiations. Interleaving, horizontal pipelining, and vertical pipelining techniques may be used to perform Montgomery multiplications. Multiple MMEs of smaller sizes may be chained together to perform Montgomery multiplications of modular exponentiations with larger key sizes. A single MME of a smaller size may be used to perform Montgomery multiplications of modular exponentiations with larger key sizes. In one embodiment, the ModExp module may be separate from the line card. In another embodiment, the ModExp module may be integrated with the line card. Also in one embodiment, the ModExp module may be a part of the network processor 1226 or a part of the PHY 1222. Yet in another embodiment, the ModExp module may be located in other network layers such as a link layer, a network layer, and/or an application layer.

Although an example embodiment of the present disclosure is described with reference to diagrams in Figures 1-12, persons of ordinary skill in the art will readily appreciate that many other methods of implementing the present invention may alternatively be used. For example, the order of execution of the functional blocks or process procedures may be changed, and/or some of the functional blocks or process procedures described may be changed, eliminated, or combined.

In the preceding description, various aspects of the present disclosure have been described. For purposes of explanation, specific numbers, systems and configurations were set forth in order to provide a thorough understanding of the present disclosure. However, it is apparent to one skilled in the art having the benefit of this disclosure that the present disclosure may be practiced without the specific details. In other instances, well-known features; components, or modules were omitted, simplified, combined, or split in order not to obscure the present disclosure.

Embodiments of the present disclosure described herein may be implemented in circuitry, which includes hardwired circuitry, digital circuitry, analog circuitry, programmable circuitry, and so forth. They may also be implemented in computer programs. Such computer programs may be coded in a high level procedural or object oriented programming language. However, the program(s) can be implemented in assembly or machine language if desired. The language may be compiled or interpreted. Additionally, these techniques may be used in a wide variety of networking environments. Such computer programs may be stored on a storage media or device (e.g., hard disk drive, floppy disk drive, read only memory (ROM), CD-ROM device, flash memory device, digital versatile disk (DVD), or other storage device) readable by a general or special purpose programmable processing system, for configuring and operating the processing system when the storage media or device is read by the processing system to perform the procedures described herein. Embodiments of the disclosure may also be considered to be implemented as a machine-readable storage medium, configured for use with a processing system, where the storage medium so configured causes the processing system to operate in a specific and predefined manner to perform the functions described herein.

While this disclosure has been described with reference to illustrative embodiments, this description is not intended to be construed in a limiting sense. Various modifications of the illustrative embodiments, as well as other embodiments of the disclosure, which are apparent to persons skilled in the art to which the disclosure pertains are deemed to lie within the scope of the disclosure as defined by the claims.

## Claims

1. An apparatus for performing modular exponentiations, comprising:

   at least one Montgomery multiplication engine (MME) to perform Montgomery multiplications to compute a modular exponentiation, the modular exponentiation having a size determined by the number of bits in a modulus of the modular exponentiation; and
   a controller to determine a method for performing Montgomery multiplications for the modular exponentiation, based at least in part on the size of the modular exponentiation and a size of an available MME among the at least one MME;

   wherein the at least one MME comprises:

   a plurality of Montgomery multiplication processing elements (MMPEs) to perform basic operations for at least one Montgomery multiplication, a basic operation comprising an addition; **characterised in that** the at least one MME further comprises:

   a scheduler to schedule the plurality of MMPEs to pipeline the process of performing the basic operations both horizontally and vertically for a Montgomery multiplication by collaborating with the controller, the Montgomery multiplication comprising a plurality of iterations of N basic operations, wherein N is a positive integer;

   wherein the vertical pipelining comprises pipelining the N basic operations across iterations.

2. The apparatus of claim 1, wherein the size of an MME is the maximum size of modular exponentiations that the MME is designed to support.

3. The apparatus of claim 1, wherein the method comprises at least one of:

   using an MME whose size matches the size of the modular exponentiation to perform the Montgomery multiplications;
   chaining multiple MMEs whose sizes are smaller than the size of the modular exponentiation to perform the Montgomery multiplications; and
   using a single MME whose size is smaller than the size of the modular exponentiation to perform the Montgomery multiplications.

4. The apparatus of claim 1, wherein the controller further selects at least one or more MMEs from the at least one MME to perform the Montgomery multiplications according to the determined method.

5. The apparatus of claim 1, wherein the controller is capable of chaining multiple MMEs of at least one first size to perform Montgomery multiplications for a modular exponentiation of a second size, wherein the second size is larger than the at least one first size.

6. The apparatus of claim 1, wherein the controller is capable of controlling a single MME of a first size to perform Montgomery multiplications for a modular exponentiation of a second size, wherein the second size is larger than the first size.

7. The apparatus of claim 1, wherein the controller accepts input parameters for a modular exponentiation, prepares input data to the at least one MME based at least in part on the input parameters, and produces a final result for the modular exponentiation based on a result obtained from the at least one MME.

8. The apparatus of claim 1, wherein the scheduler further schedules the plurality of MMPEs to interleave processes of performing the basic operations for two separate Montgomery multiplications by collaborating with the controller.

9. The apparatus of claim 1, wherein the horizontal pipelining comprises grouping the N basic operations within an iteration into a plurality of horizontal blocks and pipelining operations involved in the plurality of horizontal blocks.

10. A method for performing modular exponentiations, comprising:

   receiving input parameters for at least one modular exponentiation;
   determining a method for performing Montgomery multiplications to complete the at least one modular exponentiation based at least in part on a size of the at least one modular exponentiation;
   performing the Montgomery multiplications using at least one Montgomery multiplication engine (MME) based on the determined method; and
   producing a result for the at least one modular exponentiation based on output data from the at least one MME;

   wherein performing the Montgomery multiplications comprises:

   performing basic operations for each Montgomery multiplication, a Montgomery multiplication comprising a plurality of iterations of N basic operations, wherein N is a positive integer and a basic operation includes an addition; and
   pipelining the basic operations both horizontally and vertically;

   wherein the vertical pipelining comprises pipelining the N basic operations across iterations.

11. The method of claim 10, wherein a size of a modular exponentiation is determined by the number of bits in a modulus of the modular exponentiation.

12. The method of claim 10, wherein determining the method for performing the Montgomery multiplications comprises comparing the size of the at least one modular exponentiation and sizes of available MMEs, a size of an MME is the maximum size of modular exponentiations that the MME is designed to support.

13. The method of claim 10, wherein the method for performing the Montgomery multiplications comprises at least one of:

   using an MME whose size matches the size of the modular exponentiation to perform the Montgomery multiplications;
   chaining multiple MMEs whose sizes are smaller than the size of the modular exponentiation to perform the Montgomery multiplications; and
   using a single MME whose size is smaller than the size of the modular exponentiation to perform the Montgomery multiplications.

14. The method of claim 10, further comprising selecting at least one Montgomery multiplication engine (MME) to perform the Montgomery multiplications based on the determined method.

15. The method of claim 10, wherein performing the Montgomery multiplications comprises:

   chaining multiple MMEs whose sizes are smaller than the size of the at least one modular exponentiation; and
   using the chained MMEs to perform the Montgomery multiplications.

16. The method of claim 10, wherein performing the Montgomery multiplications comprises using a single MME whose size is smaller than the size of the at least one modular exponentiation to perform the Montgomery multiplications.

17. The method of claim 10, further comprising preparing input data to the at least one MME based at least in part on the input parameters received.

18. The method of claim 10, wherein performing the Montgomery multiplications comprises interleaving two separate modular exponentiations through the at least one MME.

19. The method of claim 10, the horizontal pipelining comprises grouping the N basic operations within an iteration into a plurality of horizontal blocks and pipelining operations involved in the plurality of horizontal blocks.

20. A network system, comprising:

   a switch fabric;
   a plurality of line cards interconnected by the switch fabric, and
   a plurality of modular exponentiation modules each in accordance with the apparatus of any one of claims 1 to 7, each operably coupled with a line card.


**Patentansprüche**

1. Vorrichtung zum Ausführen modularer Exponentiationen, die umfasst:

   zumindest eine Montgomery-Multiplikations-Engine (Montgomery multiplication engine, MME), um Montgomery-Multiplikationen auszuführen, um eine modulare Exponentiation zu berechnen, wobei die Größe der modularen Exponentiation durch die Anzahl der Bits in einem Modulus der modularen Exponentiation bestimmt ist, und einen Controller, um ein Verfahren zum Ausführen von Montgomery-Multiplikationen für die modulare Exponentiation zu ermitteln, das zumindest zum Teil auf der Größe der modularen Exponentiation und der Größe einer verfügbaren MME aus der Anzahl der MMEs (zumindest eine MME) beruht,

   wobei die zumindest eine MME umfasst:

   eine Vielzahl von Montgomery-Multiplikationen verarbeitenden Elementen (Montgomery multiplication processing elements, MMPEs) zum Ausführen grundlegender Operationen für zumindest eine Montgomery-Multiplikation, wobei eine grundlegende Operation eine Addition umfasst, **dadurch gekennzeichnet, dass** die zumindest eine MME weiter umfasst:

   einen Scheduler, der die Mehrzahl der MMPEs zeitlich steuert, um das horizontale und vertikale Pipelining der Ausführung der grundlegenden Operationen für eine Montgomery-Multiplikation durch Zusammenwirken mit dem Controller zu erreichen, wobei die Montgomery-Multiplikation eine Mehrzahl von Iterationen von N grundlegenden Operationen umfasst, wobei N eine positive ganze Zahl ist,
   und wobei das vertikale Pipelining das Pipelining der N grundlegenden Operationen über Iterationen hinweg umfasst.

2. Vorrichtung nach Anspruch 1, wobei die Größe einer MME der maximalen Größe der modularen Exponentionen entspricht, für deren Unterstützung die MME ausgelegt ist.

3. Vorrichtung nach Anspruch 1, wobei das Verfahren zumindest einen der folgenden Punkte umfasst:

   das Verwenden einer MME, deren Größe der Größe der modularen Exponentiation angepasst ist, um die Montgomery-Multiplikationen auszuführen;
   das Verketten mehrerer MMEs, deren Größe jeweils kleiner als die der modularen Exponentiation ist, um die Montgomery-Multiplikationen auszuführen, und
   das Verwenden einer einzigen MME, deren Größe kleiner als die Größe der modularen Exponentiation ist, um die Montgomery-Multiplikationen auszuführen.

4. Vorrichtung nach Anspruch 1, wobei der Controller weiter zumindest eine oder mehrere MMEs aus der zumindest einen MME auswählt, um die Montgomery-Multiplikationen gemäß dem ermittelten Verfahren auszuführen.

5. Vorrichtung nach Anspruch 1, wobei der Controller in der Lage ist, mehrere MMEs zumindest einer ersten Größe zu verketten, um Montgomery-Multiplikationen für eine modulare Exponentiation einer zweiten Größe auszuführen, wobei die zweite Größe größer als die zumindest eine erste Größe ist.

6. Vorrichtung nach Anspruch 1, wobei der Controller in der Lage ist, eine einzige MME einer ersten Größe zu steuern, um Montgomery-Multiplikationen für eine modulare Exponentiation einer zweiten Größe auszuführen, wobei die zweite Größe größer als die erste Größe ist.

7. Vorrichtung nach Anspruch 1, wobei der Controller Eingabeparameter für eine modulare Exponentiation abnimmt, Eingabedaten für die zumindest eine MME vorbereitet - die zumindest zum Teil auf den Eingabeparametern beruhen - und ein Endergebnis für die modulare Exponentiation erstellt, das auf einem von der zumindest einen MME gelieferten Ergebnis basiert.

8. Vorrichtung nach Anspruch 1, wobei der Scheduler weiter die mehreren MMPEs zeitlich so steuert, dass sie Prozesse zum Ausführen der grundlegenden Operationen für zwei separate Montgomery-Multiplikationen durch Zusammenwirken mit dem Controller miteinander verzahnen.

9. Vorrichtung nach Anspruch 1, wobei das horizontale Pipelining die Gruppierung der N grundlegenden Operationen innerhalb einer Iteration in eine Mehrzahl horizontaler Blöcke und das Pipelining von Operationen, die an der Mehrzahl horizontaler Blöcke beteiligt sind, umfasst.

10. Verfahren zum Ausführen modularer Exponentiationen, das umfasst:

das Empfangen der Eingabeparameter für zumindest eine modulare Exponentiation;
das Ermitteln eines Verfahrens zum Ausführen von Montgomery-Multiplikationen - um die zumindest eine modulare Exponentiation fertigzustellen - das zumindest zum Teil auf der Größe der zumindest einen modularen Exponentiation basiert;
das Ausführen der Montgomery-Multiplikationen auf der Basis des ermittelten Verfahrens unter Verwendung von zumindest einer Montgomery-Multiplikations-Engine (MME) und
das Erstellen eines Ergebnisses für die zumindest eine modulare Exponentiation auf der Basis von Ausgabedaten der zumindest einen MME,

wobei das Ausführen der Montgomery-Multiplikationen Folgendes umfasst:

das Ausführen grundlegender Operationen für jede Montgomery-Multiplikation, wobei eine Montgomery-Multiplikation eine Mehrzahl von Iterationen von N grundlegenden Operationen umfasst, wobei N eine positive ganze Zahl ist und eine grundlegende Operation eine Addition umfasst, und
das sowohl horizontale als auch vertikale Piepelining der grundlegenden Operationen, wobei das vertikale Pipelining das Pipelining der N grundlegenden Operationen über Iterationen hinweg umfasst.

11. Verfahren nach Anspruch 10, wobei die Größe einer modularen Exponentiation durch die Anzahl von Bits in einem Modulus der modularen Exponentiation bestimmt ist.

12. Verfahren nach Anspruch 10, wobei das Ermitteln des Verfahrens zum Ausführen der Montgomery-Multiplikationen das Vergleichen der Größe der zumindest einen modularen Exponentiation mit den Größen verfügbarer MMEs umfasst, wobei die Größe einer MME die maximale Größe modularer Exponentiationen ist, für deren Unterstützung die MME ausgelegt ist.

13. Verfahren nach Anspruch 10, wobei das Verfahren zum Ausführen der Montgomery-Multiplikationen zumindest einen der folgenden Punkte umfasst:

das Verwenden einer MME, deren Größe der Größe der modularen Exponentiation angepasst ist, um die Montgomery-Multiplikationen auszuführen;
das Verketten mehrerer MMEs, deren Größe jeweils kleiner als die der modularen Exponentiation ist, um die Montgomery-Multiplikationen auszuführen, und
das Verwenden einer einzigen MME, deren Größe kleiner als die Größe der modularen Exponentiation ist, um die Montgomery-Multiplikationen auszuführen.

14. Verfahren nach Anspruch 10, das ferner das Auswählen zumindest einer Montgomery-Multiplikations-Engine (MME) umfasst, um die Montgomery-Multiplikationen auf der Basis des ermittelten Verfahrens auszuführen.

15. Verfahren nach Anspruch 10, wobei das Ausführen der Montgomery-Multiplikationen Folgendes umfasst:

das Verketten mehrerer MMEs, deren Größe jeweils kleiner als die der zumindest einen modularen Exponentiation ist, und
das verwenden der verketteten MMEs, um die Montgomery-Multiplikationen auszuführen.

16. Verfahren nach Anspruch 10, wobei das Ausführen der Montgomery-Multiplikationen die Verwendung einer einzigen MME umfasst, deren Größe kleiner als die Größe der zumindest einen modularen Exponentiation ist, um die Montgomery-Multiplikationen auszuführen.

17. Verfahren nach Anspruch 10, das weiter die Vorbereitung von Eingabedaten für die zumindest eine MME umfasst, die zumindest zum Teil auf den empfangenen Eingabeparametern basieren.

18. Verfahren nach Anspruch 10, wobei das Ausführen der Montgomery-Multiplikationen das Verzahnen zweier separater modularer Exponentiationen durch die zumindest eine MME umfasst.

19. Verfahren nach Anspruch 10, wobei das horizontale Pipelining die Gruppierung der N grundlegenden Operationen innerhalb einer Iteration in eine Mehrzahl horizontaler Blöcke und das Pipelining von Operationen, die an der Mehrzahl horizontaler Blöcke beteiligt sind, umfasst.

20. Ein Netzwerk-System, das umfasst:

eine Switching-Fabric,
eine Mehrzahl von Line-Cards, die durch die Switching-Fabric untereinander verbunden sind, und
eine Mehrzahl von Modular-Exponentiations-Modulen jedes gemäß der Vorrichtung nach einem der Ansprüche 1 bis 7 - von denen jedes operativ mit einer Line-Card verbunden ist.

## Revendications

1. Appareil pour réaliser des exponentiations modulaires, comprenant :

au moins un moteur de multiplication de Montgomery (MME) pour réaliser des multiplications de Montgomery pour calculer une exponentiation modulaire, l'exponentiation modulaire ayant une taille déterminée par le nombre de bits dans un module de l'exponentiation modulaire ; et
un dispositif de commande pour déterminer un procédé pour réaliser des multiplications de Montgomery pour l'exponentiation modulaire, sur la base au moins en partie de la taille de l'exponentiation modulaire et d'une taille d'un MME disponible parmi le au moins un MME ;

dans lequel le au moins un MME comprend :

une pluralité d'éléments de traitement de multiplication de Montgomery (MMPE) pour réaliser des opérations fondamentales pour au moins une multiplication de Montgomery, une opération fondamentale comprenant une addition ;

**caractérisé en ce que** le au moins un MME comprend en outre :

un programmateur pour programmer la pluralité de MMPE pour pipeliner le traitement de réalisation des opérations fondamentales à la fois horizontalement et verticalement pour une multiplication de Montgomery en collaborant avec le dispositif de commande, la multiplication de Montgomery comprenant une pluralité d'itérations de N opérations fondamentales, où N est un entier positif ;

dans lequel le pipelinage vertical comprend le pipelinage des N opérations fondamentales à travers des itérations.

2. Appareil selon la revendication 1, dans lequel la taille d'un MME est la taille maximum des exponentiations modulaires pour laquelle le MME est conçu de supporter.

3. Appareil selon la revendication 1, dans lequel le procédé comprend au moins un de :

l'utilisation d'un MME dont la taille correspond à la taille de l'exponentiation modulaire pour réaliser les multiplications de Montgomery ;
le chaînage de multiples MME dont des tailles sont plus petites que la taille de l'exponentiation modulaire pour réaliser les multiplications de Montgomery ; et
l'utilisation d'un MME unique dont la taille est plus petite que la taille de l'exponentiation modulaire pour réaliser les multiplications de Montgomery.

4. Appareil selon la revendication 1, dans lequel le dispositif de commande sélectionne en outre au moins un ou plusieurs MME à partir d'au moins un MME pour réaliser les multiplications de Montgomery selon le procédé déterminé.

5. Appareil selon la revendication 1, dans lequel le dispositif de commande est capable de chaîner de multiples MME d'au moins une première taille pour réaliser des multiplications de Montgomery pour une exponentiation modulaire d'une seconde taille, dans lequel la seconde taille est plus grande que la au moins une première taille.

6. Appareil selon la revendication 1, dans lequel le dispositif de commande est capable de commander un MME unique d'une première taille pour réaliser des multiplications de Montgomery pour une exponentiation modulaire d'une seconde taille, dans lequel la seconde taille est plus grande que la première taille.

7. Appareil selon la revendication 1, dans lequel le dispositif de commande accepte des paramètres d'entrée pour une exponentiation modulaire, prépare des données d'entrée pour le au moins un MME sur la base d'au moins en partie des paramètres d'entrée, et produit un résultat final pour l'exponentiation modulaire sur la base d'un résultat obtenu à partir d'au moins un MME.

8. Appareil selon la revendication 1, dans lequel le programmateur programme en outre la pluralité de MMPE pour entrelacer des procédés de réalisation des opérations fondamentales pour deux multiplications de Montgomery séparées en collaborant avec le dispositif de commande.

9. Appareil selon la revendication 1, dans lequel le pipelinage horizontal comprend le groupement de N opérations fondamentales dans une itération en une pluralité de blocs horizontaux et des opérations de pipelinage impliquées dans la pluralité de blocs horizontaux.

10. Procédé pour réaliser des exponentiations modulaires, comprenant :

   la réception de paramètres d'entrée pour au moins une exponentiation modulaire ;
   la détermination d'un procédé pour réaliser des multiplications de Montgomery pour compléter au moins une exponentiation modulaire sur la base au moins en partie d'une taille d'au moins une exponentiation modulaire ;
   la réalisation des multiplications de Montgomery en utilisant au moins un moteur de multiplication de Montgomery (MME) sur la base du procédé déterminé ; et
   la production d'un résultat pour au moins une exponentiation modulaire sur la base de données de sortie à partir d'au moins un MME ;

   dans lequel la réalisation des multiplications de Montgomery comprend :

   la réalisation d'opérations fondamentales pour chaque multiplication de Montgomery, une multiplication de Montgomery comprenant une pluralité d'itérations de N opérations fondamentales, où N est un entier positif et une opération fondamentale comprend une addition ; et
   le pipelinage des opérations fondamentales à la fois horizontalement et verticalement ;

   dans lequel le pipelinage vertical comprend le pipelinage de N opérations fondamentales à travers des itérations.

11. Procédé selon la revendication 10, dans lequel une taille d'une exponentiation modulaire est déterminée par le nombre de bits dans un module de l'exponentiation modulaire.

12. Procédé selon la revendication 10, dans lequel la détermination du procédé pour réaliser les multiplications de Montgomery comprend la comparaison de la taille d'au moins une exponentiation modulaire et des tailles de MME disponibles, une taille d'un MME est la taille maximum d'exponentiations modulaires pour laquelle le MME est conçu de supporter.

13. Procédé selon la revendication 10, dans lequel le procédé pour réaliser des multiplications de Montgomery comprend au moins un de :

   l'utilisation d'un MME dont la taille correspond à la taille de l'exponentiation modulaire pour réaliser les multiplications de Montgomery ;
le chaînage de multiples MME dont les tailles sont plus petites que la taille de l'exponentiation modulaire pour réaliser les multiplications de Montgomery ; et
l'utilisation d'un MME unique dont la taille est plus petite que la taille de l'exponentiation modulaire pour réaliser les multiplications de Montgomery.

14. Procédé selon la revendication 10, comprenant en outre la sélection d'au moins un moteur de multiplication de Montgomery (MME) pour réalise les multiplications de Montgomery sur la base du procédé déterminé.

15. Procédé selon la revendication 10, dans lequel la réalisation des multiplications de Montgomery comprend :

le chaînage de multiples MME dont les tailles sont plus petites que la taille d'au moins une exponentiation modulaire ; et
l'utilisation de MME chaînés pour réaliser les multiplications de Montgomery.

16. Procédé selon la revendication 10, dans lequel la réalisation des multiplications de Montgomery comprend l'utilisation d'un MME unique dont la taille est plus petite que la taille d'au moins une exponentiation modulaire pour réaliser les multiplications de Montgomery.

17. Procédé selon la revendication 10, comprenant en outre la préparation de données d'entrée à au moins un MME sur la base au moins en partie des paramètres d'entrée reçus.

18. Procédé selon la revendication 10, dans lequel la réalisation des multiplications de Montgomery comprend l'entrelacement de deux exponentiations modulaires séparées à travers au moins un MME.

19. Procédé selon la revendication 10, dans lequel le pipelinage horizontal comprend le groupage de N opérations fondamentales dans une itération en une pluralité de blocs horizontaux et le pipelinage d'opérations impliquées dans la pluralité de blocs horizontaux.

20. Système de réseau comprenant :

une structure de commutateurs ;
une pluralité de cartes de ligne interconnectées par la structure de commutateurs, et
une pluralité de modules d'exponentiation modulaire chacun selon l'appareil d'une quelconque des revendications 1 à 7, chacun couple fonctionnellement à une carte de ligne.

FIGURE 1

EP 1 789 869 B1

```
┌─────────────────────────┐
│   OBTAIN RECEIVER'S      │────  210
│  PUBLIC KEY BY SENDER    │
└─────────────────────────┘
            │
            ▼
┌─────────────────────────┐
│   ENCRYPT CLEAR TEXT     │────  220
│       MESSAGE            │
└─────────────────────────┘
            │
            ▼
┌─────────────────────────┐
│    SEND  ENCRYPTED       │────  230
│       MESSAGE            │
└─────────────────────────┘
            │
            ▼
┌─────────────────────────┐
│   RECEIVE  ENCRYPTED     │────  240
│  MESSAGE  BY  RECEIVER   │
└─────────────────────────┘
            │
            ▼
┌─────────────────────────┐
│   DECRYPT  ENCRYPTED     │────  250
│    MESSAGE  USING        │
│  RECEIVER'S  PRIVATE KEY │
└─────────────────────────┘
            │
            ▼
┌─────────────────────────┐
│   OBTAIN CLEAR MESSAGE   │────  260
└─────────────────────────┘
```

## FIGURE 2

```
Line 1:     function ModExp(A, e, m)
            {
Line 2:         a = (A • r) mod m;
Line 3:         x = (1 • r) mod m;
Line 4:         for i = (n-1) downto 0
                {
Line 5:             x = MontMult(x, x, m);
Line 6:             if e[i] = 1 then x = MontMult(x, a, m);
                }
Line 7:         X = MontMult(x, 1, m);
Line 8:         return X;
            }
```

# FIGURE 3

## FIGURE 4A

```
Line 1:     function MontMult(x, y, m);
            {
Line 2:         T = 0;
Line 3:         for i = 0 to k-1
                {
Line 4:             Z = (T + x[i] • y) (mod 2);
Line 5:             T = (T + Z • m + x[i] • y) / 2;
                }
Line 6:         if T >= m then T = (T – m);
Line 7:         return T;
            }
```

© 2004 INTEL CORPORATION     ## FIGURE 4B

```
Line 1:     function MontMult(x, y, m);
            {
Line 2:         T = 0;
Line 3:         for i = 0 to k-1
                {
Line 4:             T = (T + (T[0] xor (x[i] • y[0])) • m + x[i] • y);
Line 5:             T = T / 2;
                }
Line 6:         if T >= m then T = (T – m);
Line 7:         return T;
            }
```

© 2004 INTEL CORPORATION     ## FIGURE 4C

```
Line 1:     function MontMult(x, y, m);
            {
Line 2:         T = 0; /* C = 0; S = 0; T = C + S */
Line 3:         for i = 0 to k-1
                {
Line 4:             (C, S) = (C + S + sel_m • m + sel_y • y + sel_m&y • (m + y));
Line 5:             C = C/2; S = S/2; /* T = T / 2; */
                }
Line 6:         if T >= m then T = (T – m); /* T = C + S; */
Line 7:         return T;
            }
```

FIGURE 5

| BIT BLOCK CYCLE | BLOCK 5 | BLOCK 4 | BLOCK 3 | BLOCK 2 | BLOCK 1 |
|---|---|---|---|---|---|
| CYCLE 1 | | | | | P[0] |
| CYCLE 2 | | | | P[0] | Q[0] |
| CYCLE 3 | | | P[0] | Q[0] | P[1] |
| CYCLE 4 | | P[0] | Q[0] | P[1] | Q[1] |
| CYCLE 5 | P[0] | Q[0] | P[1] | Q[1] | P[2] |
| CYCLE 6 | Q[0] | P[1] | Q[1] | P[2] | Q[2] |
| CYCLE 7 | P[1] | Q[1] | P[2] | Q[2] | P[3] |
| CYCLE 8 | Q[1] | P[2] | Q[2] | P[3] | Q[3] |
| CYCLE 9 | P[2] | Q[2] | P[3] | Q[3] | P[4] |
| CYCLE 10 | Q[2] | P[3] | Q[3] | P[4] | Q[4] |

FIGURE 6

## ENGINE 2

**CYCLE 1:**

| B5 | B4 | B3 | B2 | B1 |
|---|---|---|---|---|
|  |  |  |  |  |
|  |  |  |  |  |

**CYCLE 2:**

| B5 | B4 | B3 | B2 | B1 |
|---|---|---|---|---|
|  |  |  |  |  |
|  |  |  |  |  |

**CYCLE 3:**

| B5 | B4 | B3 | B2 | B1 |
|---|---|---|---|---|
|  |  |  |  |  |
|  |  |  |  |  |

**CYCLE 4:**

| B5 | B4 | B3 | B2 | B1 |
|---|---|---|---|---|
|  |  |  |  |  |
|  |  |  |  |  |

**CYCLE 5:**

| B5 | B4 | B3 | B2 | B1 |
|---|---|---|---|---|
|  |  |  |  |  |
|  |  |  |  |  |

**CYCLE 6:**

| B5 | B4 | B3 | B2 | B1 |
|---|---|---|---|---|
|  |  |  |  | P[0] |
|  |  |  |  |  |

**CYCLE 7:**

| B5 | B4 | B3 | B2 | B1 |
|---|---|---|---|---|
|  |  |  | P[0] |  |
|  |  |  |  | Q[0] |

**CYCLE 8:**

| B5 | B4 | B3 | B2 | B1 |
|---|---|---|---|---|
|  |  | P[0] |  | P[1] |
|  |  |  | Q[0] |  |

**CYCLE 9:**

| B5 | B4 | B3 | B2 | B1 |
|---|---|---|---|---|
|  | P[0] |  | P[1] |  |
|  |  | Q[0] |  | Q[1] |

**CYCLE 10:**

| B5 | B4 | B3 | B2 | B1 |
|---|---|---|---|---|
| P[0] |  | P[1] |  | P[2] |
|  | Q[0] |  | Q[1] |  |

## ENGINE 1

**CYCLE 1:**

| B5 | B4 | B3 | B2 | B1 |
|---|---|---|---|---|
|  |  |  |  | P[0] |
|  |  |  |  |  |

**CYCLE 2:**

| B5 | B4 | B3 | B2 | B1 |
|---|---|---|---|---|
|  |  |  | P[0] |  |
|  |  |  |  | Q[0] |

**CYCLE 3:**

| B5 | B4 | B3 | B2 | B1 |
|---|---|---|---|---|
|  |  | P[0] |  | P[1] |
|  |  |  | Q[0] |  |

**CYCLE 4:**

| B5 | B4 | B3 | B2 | B1 |
|---|---|---|---|---|
|  | P[0] |  | P[1] |  |
|  |  | Q[0] |  | Q[1] |

**CYCLE 5:**

| B5 | B4 | B3 | B2 | B1 |
|---|---|---|---|---|
| P[0] |  | P[1] |  | P[2] |
|  | Q[0] |  | Q[1] |  |

**CYCLE 6:**

| B5 | B4 | B3 | B2 | B1 |
|---|---|---|---|---|
|  | P[1] |  | P[2] |  |
| Q[0] |  | Q[1] |  | Q[2] |

**CYCLE 7:**

| B5 | B4 | B3 | B2 | B1 |
|---|---|---|---|---|
| P[1] |  | P[2] |  | P[3] |
|  | Q[1] |  | Q[2] |  |

**CYCLE 8:**

| B5 | B4 | B3 | B2 | B1 |
|---|---|---|---|---|
|  | P[2] |  | P[3] |  |
| Q[1] |  | Q[2] |  | Q[3] |

**CYCLE 9:**

| B5 | B4 | B3 | B2 | B1 |
|---|---|---|---|---|
| P[2] |  | P[3] |  | P[4] |
|  | Q[2] |  | Q[3] |  |

**CYCLE 10:**

| B5 | B4 | B3 | B2 | B1 |
|---|---|---|---|---|
|  | P[3] |  | P[4] |  |
| Q[2] |  | Q[3] |  | Q[4] |

# FIGURE 7

FIGURE 8

EP 1 789 869 B1

CYCLE 1:

| B5 | B4 | B3 | B2 | B1 |
|---|---|---|---|---|
| | | | | P[0]-1 |
| | | | | |

CYCLE 8:

| B5 | B4 | B3 | B2 | B1 |
|---|---|---|---|---|
| | P[2]-4 | | P[0]-7 | |
| Q[1]-5 | | Q[2]-3 | | Q[0]-6 |

CYCLE 2:

| B5 | B4 | B3 | B2 | B1 |
|---|---|---|---|---|
| | | | P[0]-2 | |
| | | | | Q[0]-1 |

CYCLE 9:

| B5 | B4 | B3 | B2 | B1 |
|---|---|---|---|---|
| P[2]-5 | | P[0]-8 | | P[1]-6 |
| | Q[2]-4 | | Q[0]-7 | |

CYCLE 3:

| B5 | B4 | B3 | B2 | B1 |
|---|---|---|---|---|
| | | P[0]-3 | | P[1]-1 |
| | | | Q[0]-2 | |

CYCLE 10:

| B5 | B4 | B3 | B2 | B1 |
|---|---|---|---|---|
| | P[0]-9 | | P[1]-7 | |
| Q[2]-5 | | Q[0]-8 | | Q[1]-6 |

CYCLE 4:

| B5 | B4 | B3 | B2 | B1 |
|---|---|---|---|---|
| | P[0]-4 | | P[1]-4 | |
| | | Q[0]-3 | | Q[1]-1 |

CYCLE 11:

| B5 | B4 | B3 | B2 | B1 |
|---|---|---|---|---|
| P[0]-10 | | P[1]-8 | | P[2]-6 |
| | Q[0]-9 | | Q[1]-7 | |

CYCLE 5:

| B5 | B4 | B3 | B2 | B1 |
|---|---|---|---|---|
| P[0]-5 | | P[1]-3 | | P[2]-1 |
| | Q[0]-4 | | Q[1]-2 | |

CYCLE 12:

| B5 | B4 | B3 | B2 | B1 |
|---|---|---|---|---|
| | P[1]-9 | | P[2]-7 | |
| Q[0]-10 | | Q[1]-8 | | Q[2]-6 |

CYCLE 6:

| B5 | B4 | B3 | B2 | B1 |
|---|---|---|---|---|
| | P[1]-4 | | P[2]-2 | |
| Q[0]-5 | | Q[1]-3 | | Q[2]-1 |

CYCLE 13:

| B5 | B4 | B3 | B2 | B1 |
|---|---|---|---|---|
| P[1]-10 | | P[2]-8 | | P[3]-1 |
| | Q[1]-9 | | Q[2]-7 | |

CYCLE 7:

| B5 | B4 | B3 | B2 | B1 |
|---|---|---|---|---|
| P[1]-5 | | P[2]-3 | | P[0]-6 |
| | Q[1]-3 | | Q[2]-2 | |

CYCLE 14:

| B5 | B4 | B3 | B2 | B1 |
|---|---|---|---|---|
| | P[2]-9 | | P[3]-2 | |
| Q[1]-10 | | Q[2]-8 | | Q[3]-1 |

# FIGURE 9

EP 1 789 869 B1

FIGURE 10

RECEIVE INPUT PARAMETERS FOR TWO MODULAR EXPONENTIATIONS ──1110

DETERMINE PERFORMING METHOD AND SELECT MMES ──1120

PREPARE SELECTED MMES ──1130

PERFORM DESIRED MONTGOMERY MULTIPLICATIONS ACCORDING TO DETERMINED METHOD ──1140

NO ◁ COMPLETE ALL MONTGOMERY MULTIPLICATIONS? ──1150

YES

OBTAIN FINAL RESULTS ──1160

FIGURE 11

FIGURE 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030065696 A